(19) Europäisches Patentamt
European Patent Office
Office européen des brevets

(11) **EP 1 692 026 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **04791335.5**

(22) Anmeldetag: **28.10.2004**

(51) Int Cl.:
*B60T 8/88* (2006.01)    *B60T 8/00* (2006.01)
*G01P 21/00* (2006.01)    *B60G 17/015* (2006.01)
*B60R 21/01* (2006.01)

(86) Internationale Anmeldenummer:
**PCT/EP2004/052707**

(87) Internationale Veröffentlichungsnummer:
**WO 2005/056360 (23.06.2005 Gazette 2005/25)**

(54) **VERFAHREN UND ANORDNUNG ZUR ÜBERWACHUNG EINER IN EINEM RADFAHRZEUG ANGEORDNETEN MESSEINRICHTUNG**

METHOD AND ARRANGEMENT FOR MONITORING A MEASURING DEVICE LOCATED IN A WHEELED VEHICLE

PROCEDE ET SYSTEME DE SURVEILLANCE D'UN DISPOSITIF DE MESURE DISPOSE DANS UN VEHICULE A ROUES

(84) Benannte Vertragsstaaten:
**DE FR**

(30) Priorität: **12.12.2003 DE 10358337**

(43) Veröffentlichungstag der Anmeldung:
**23.08.2006 Patentblatt 2006/34**

(73) Patentinhaber: **Continental Automotive GmbH 30165 Hannover (DE)**

(72) Erfinder:
• **FIEDLER, Jens**
  **93107 Thalmassing (DE)**
• **MAYER, Andreas**
  **93049 Regensburg (DE)**
• **SCHWEIGER, Thomas**
  **93086 Wörth (DE)**
• **STRATESTEFFEN, Martin**
  **93049 Regensburg (DE)**

(56) Entgegenhaltungen:
DE-A1- 10 054 154    DE-A1- 10 162 689
DE-A1- 10 220 575    DE-A1- 19 744 084
US-A- 5 408 411      US-A1- 2003 065 430
US-B1- 6 260 405

**Beschreibung**

Die Erfindung betrifft ein Verfahren und eine Anordnung zur Überwachung einer in einem Radfahrzeug angeordneten Messeinrichtung.

Messeinrichtungen, die beispielsweise Beschleunigungssensoren und Drehratensensoren aufweisen, liefern Eingangsgrößen für elektronische Systeme moderner Radfahrzeuge (Straßenkraftfahrzeuge, geländegängige Radfahrzeuge und andere spurungebundene Radfahrzeuge). Solche elektronischen Systeme sind z. B. ein Antiblockiersystem (ABS), ein elektronisches Stabilitätsprogramm (ESP), ein Navigationssystem, Adaptive Cruise Control (ACC), ein Schutzsystem gegen ein Überschlagen des Fahrzeugs (roll-over-protection), Systeme zur Stabilisierung von Wankbewegungen in Personen- und Nutzkraftfahrzeugen sowie in Anhängern, ein Steuerungssystem zur Steuerung von Airbags, Hill-Holder-Systeme, Scheinwerfer-Richtungssteuerung (Light-Angle-Control), Lenksysteme mit Kraftunterstützung, Steuerungssysteme zur Steuerung von Federung und/oder Dämpfung des Fahrzeugs, Systeme zur Steuerung der Kraftübertragung im Antriebsstrang des Fahrzeugs, Motor-Steuerungssysteme, Anzeigesysteme zum Anzeigen eines Füllstandes von Treibstoff und anderen Flüssigkeiten, Systeme zur Detektion eines Beladungszustandes des Fahrzeuges und/oder falscher Reifendrücke, Türverriegelungssysteme, Diebstahlsicherungssysteme, Systeme zur Steuerung aerodynamischer Eigenschaften des Fahrzeuges, Unfalldaten-Speichersysteme und Erkennungs- und/oder Warnsysteme zur Anzeige und/oder Warnung bei starken Neigungswinkeln eines geländegängigen Fahrzeuges. Die Erfindung betrifft insbesondere eine Kombination der Messeinrichtung mit zumindest einem dieser Systeme oder mit einer beliebigen Kombination der genannten Systeme.

Insbesondere Beschleunigungssensoren liefern für die genannten Systeme wesentliche Informationen. In vielen Fällen wird die tatsächliche (wirkliche) Längs -und/oder Querbeschleunigung des Fahrzeuges benötigt. Beschleunigungssensoren messen dagegen abhängig von der Orientierung des Fahrzeuges eine aufgrund der Erdanziehungskraft verfälschte Messgröße.

Die DE 196 03 430 A1 beschreibt eine Schaltungsanordnung zum Ermitteln von Achslasten bei einem Kraftfahrzeug mit Daten, die von Sensoren geliefert werden, und mit einer die Sensordaten verarbeitenden Auswerteschaltung. Bei einem Ausführungsbeispiel der Schaltungsanordnung wird im Rahmen eines in einem Steuerrechner abzuarbeitenden Programms ein Beschleunigungssignal um die Erdanziehungskomponente korrigiert. Dabei wird eine von einem Geländesteigungssensor gemessene Geländesteigung verwendet.

Aus der DE 198 44 913 A1 ist eine Vorrichtung zur Überwachung eines in einem Fahrzeug angeordneten Querbeschleunigungssensors bekannt, mit dem eine erste Querbeschleunigungsgröße erfasst wird. Mit Hilfe von Bestimmungsmitteln wird eine zweite Querbeschleunigungsgröße direkt in Abhängigkeit von Radgeschwindigkeitsgrößen, die mit entsprechenden Erfassungsmitteln erfasst werden, bestimmt. In Überwachungsmitteln wird zur Überwachung des Querbeschleunigungssensors ein Vergleich der gefilterten Querbeschleunigungsgröße mit der zweiten Querbeschleunigungsgröße durchgeführt.

In dieser Beschreibung wird die um die Erdanziehungskraft verfälschte Beschleunigungsgröße als effektive Beschleunigungsgröße bezeichnet. Im Stillstand des Fahrzeuges misst der Beschleunigungssensor lediglich die Auswirkungen der Erdanziehungskraft. Die wirkliche Beschleunigung kommt in der gemessenen Größe daher nicht vor. Bei Fahrten auf geneigter Fahrbahn (in Längs- und/oder Querrichtung geneigt) wird jedoch die benötigte wirkliche Beschleunigung nicht direkt gemessen. Es stehen daher fehlerbehaftete Messgrößen am Ausgang eines Beschleunigungssensors zur Verfügung. Dies ist umso nachteiliger, als gerade auf geneigter Fahrbahn sicherheitskritische Fahrsituationen auftreten können, in denen die mit der wirklichen Beschleunigung zu versorgenden Systeme zuverlässig funktionieren müssen. Ähnliche fehlerbehaftete Messgrößen liefern Beschleunigungssensoren, die in einem Fahrzeugaufbau angeordnet sind, der sich während der Fahrt z. B. während einer Beschleunigungsphase des Fahrzeugs gegenüber dem Fahrwerk neigt (seitliche Wankbewegung und/oder Nickbewegung in Längsrichtung des Fahrzeuges). Ein Wankwinkel von fünf Grad führt bereits zu einem Fehler von annähernd 1 m/s$^2$ in der Querbeschleunigung des Fahrzeuges.

Die US 5 408 411 A beschreibt ein System für die Erfassung der dem Verhalten eines Kraftfahrzeugs zugeordneten physikalischen Größen unter Zuhilfenahmen von Beschleunigungssensoren, die auf den Achsen eines im Fahrzeug ruhenden Koordinatensystems angebracht sind, einer Einheit für die Aufstellung von Transformationsgleichungen, um die linearen Beschleunigungswerte und die Winkelbeschleunigungswerte an einem beliebigen Punkt des Fahrzeugs bezüglich eines beliebigen Koordinatensystems zu bestimmen, einer Einheit für die Berechnung der Lösung der Transformationsgleichungen, mit der die erwähnten Beschleunigungswerte bezüglich des beliebigen Koordinatensystems erhalten werden, einer Einheit für die Aufstellung von Bewegungsgleichungen, die den Bewegungen in einer Mehrzahl von Freiheitsgraden entsprechen und einer Einheit für die Berechnung der Lösung der Bewegungsgleichungen mittels der erwähnten Beschleunigungswerte bezüglich des beliebigen Koordinatensystems um so die dem Fahrzeugverhalten zugeordneten physikalischen Größen zu erhalten.

Die US 6 260 405 B1 offenbart ein System zur Detektion von Abweichungen eines Beschleunigungssensors unter Zuhilfenahme eines Geschwindigkeitsmessers, bei dem eine Abweichung ermittelt wird, wenn der durch einen Beschleunigungssensor ermittelte Wert von einem Vergleichswert abweicht.

**EP 1 692 026 B1**

Aus der DE 197 44 084 geht eine Anordnung zum Ermitteln der Inertiallage eines Fahrzeugs hervor, bei der Störeinflüsse durch dynamische Fahrzeugbewegungen möglichst weitgehend ausgeschlossen sind. Dies erfolgt dadurch, dass die Beschleunigungen des Fahrzeugs in Richtung einer Hochachse und in Richtung einer Quer- und/ oder Längachse gemessen werden und dass der Lagewinkel des Fahrzeugs bezüglich seiner Längsachse und/oder der Lagewinkel bezüglich seiner Querachse sowohl aus der Beschleunigung in Richtung der Querachse bzw. Längsachse als auch aus der Beschleunigung in Richtung der Hochachse ermittelt wird.

Die US 2003/065430 wird als nächstliegender stand der Technik angesehen und offenbart ein Überwachungssystem für ein Fahrzeug mit zwei Drehratensensoren, zwei Beschleunigungssensoren sowie einem Geschwindigkeitsmesser und einer Überwachungseinheit für diese Messeinheiten, aus denen dann ein Gierwinkel, ein Schwimmwinkel und ein Nickwinkel ermittelt werden.

Die DE 102 20 575 offenbart ein Verfahren zur Erkennung einer Steilwandkurve oder einer überhöhten Kurve an einem in eine solche Kurve hineinbewegten, insbesondere zweispurigen Fahrzeug, insbesondere durch ein Fahrdynamik-Regelsystem, welches das Kurvenfahrverhalten des Fahrzeugs unter Auswertung verschiedener Sensorsignale überwacht und gegebenenfalls durch Systemeingriffe beeinflusst, wobei aus einer Beschleunigung des Fahrzeugaufbaus in Richtung der Fahrbahn in Verbindung mit einer erkannten Kurvenfahrt auf das Befahren einer Steilwandkurve bzw. einer erhöhten Kurve geschlossen wird. Bevorzugt wird eine solche Beschleunigung aus den Signalen zumindest eines Höhenstandsensors, mit Hilfe dessen der Abstand zwischen dem Fahrzeugaufbau und einer Fahrzeugrate bzw. einem damit verbundenen Fahrwerksteil gemessen werden kann, ermittelt. Eine durch eine Nickbewegung des Fahrzeugaufbaus hervorgerufene Höhenstandsänderung kann durch Berücksichtigung der Höhenstandssignale an allen Fahrzeugachsen und/ oder durch Berücksichtigung von Antriebskräften oder Bremskräften eliminiert werden, während eine Wankbewegung des Fahrzeugaufbaus durch Berücksichtigung der Höhenstandssignale an den beiden Rädern einer Fahrzeug-Achse und/ oder durch eine Abschätzung des Wankwinkels aus der gemessenen Querbeschleunigung eliminierbar ist.

Es ist eine Aufgabe der vorliegenden Erfindung, eine Anordnung und ein Verfahren der eingangs genannten Art anzugeben, mit der zuverlässige Messwerte der Fahrzeugbewegung bereitgestellt werden können.

Diese Aufgabe wird gelöst durch die Anordnung zur Überwachung einer in einem Radfahrzeug angeordneten Messeinrichtung gemäß Anspruch 1 und durch das Verfahren gemäß Anspruch 13.

Gemäß der Erfindung wird eine Messeinrichtung überwacht, die drei nicht redundante Drehraten und drei nicht redundante Linearbeschleunigungen misst. Die Messeinrichtung kann z. B. für jede Messgröße einen separaten Sensor aufweisen. Es gibt jedoch auch Sensoren, die gleichzeitig zwei der genannten Messgrößen messen. In jedem Fall liefert die Messeinrichtung die für eine Bereitstellung zuverlässiger Messwerte erforderlichen Messgrößen. Durch die Bestimmung der Orientierung des Fahrzeuges, die insbesondere durch die genannte Orientierungs-Bestimmungseinrichtung aus den drei Drehraten durchgeführt wird, können die effektiven Beschleunigungswerte in die wirklichen Beschleunigungswerte umgerechnet werden.

Außerdem findet eine Überwachung zumindest einer der gemessenen Linearbeschleunigungen unter Verwendung einer Ausgangsgröße der Orientierungs-Bestimmungseinrichtung und unter Verwendung einer Vergleichsgröße statt. Mit anderen Worten: Zumindest eine Komponente der bestimmten Orientierung, die aus den Drehraten ermittelt wurde, wird zusammen mit der Vergleichsgröße zur Überwachung zumindest einer der Linearbeschleunigungen verwendet. Wird bei der Überwachung festgestellt, dass die Linearbeschleunigung z. B. aufgrund eines Sensorfehlers nicht zuverlässig ist, kann eine geeignete Maßnahme ergriffen werden. Beispielsweise kann entschieden werden, ob die gemessene Linearbeschleunigung noch zur Weiterleitung an die genannten Systeme geeignet ist/oder ob die Vergleichsgröße verwendet werden kann. Insbesondere kann ein System, das die Linearbeschleunigung als Eingangsgröße benötigt, darüber informiert werden, dass die Linearbeschleunigung möglicherweise fehlerhaft ist, oder das System kann zumindest vorübergehend abgeschaltet werden.

Insbesondere erlaubt es die erfindungsgemäße Kombination, sowohl Neigungen in Längsrichtung des Fahrzeuges als auch in Querrichtung des Fahrzeuges zu bestimmen und die daraus ermittelten Informationen zur Überwachung und/oder zur Bestimmung der wirklichen Linearbeschleunigung zu verwenden.

Insbesondere wird die Fahrgeschwindigkeit des Radfahrzeuges bestimmt und wird die Vergleichsgröße unter Berücksichtigung der Fahrgeschwindigkeit ermittelt. Besonders gut eignen sich hierfür Informationen über die Drehgeschwindigkeit zumindest eines Rades des Radfahrzeuges, insbesondere die Drehzahlen von nicht angetriebenen Rädern des Fahrzeuges. Auf der Raddrehung beruhende Informationen erlauben auch bei stark geneigter Fahrbahn bzw. Untergrund eine zuverlässige Bestimmung der Fahrgeschwindigkeit. Die Fahrgeschwindigkeit kann jedoch alternativ oder zusätzlich auf andere Weise bestimmt werden.

Die Messeinrichtung kann insbesondere für jeden der Sensoren zur Bestimmung zumindest einer Drehrate oder einer Linearbeschleunigung einen Controller (z. B. in einem ASIC) aufweisen, der eine Ausgabe der Messsignale in analoger und/oder digitaler Form steuert. Weiterhin kann der Controller eine erste Überprüfung der Signale des Sensors dadurch durchführen, dass er durch Übertragung von Testsignalen zu dem Sensor die Erzeugung von Sensorsignalen anregt, die Sensorsignale auswertet und durch die Auswertung die Sensorsignale überprüft.

Es wird außerdem eine Recheneinrichtung vorgeschlagen, die insbesondere in einer gemeinsamen bautechnischen Einheit zusammen mit der Messeinrichtung angeordnet ist. Die Recheneinrichtung bereitet die Signale der Sensoren der Messeinrichtung auf (filtert die Signale insbesondere in einem ersten Filterprozess) und führt eine Plausibilitätsprüfung der Signale durch. Bei der Plausibilitätsprüfung werden die Messgrößen beispielsweise nach der Zeit abgeleitet. Die Messgrößen und/oder ihre Ableitungen können dann mit Grenzwerten verglichen werden, wobei die Grenzwerte insbesondere von der Fahrsituation des Fahrzeugs abhängig sein können. Ferner können die zuvor beschriebenen Controller die Recheneinrichtung überwachen und umgekehrt. Weiterhin wird die zuvor beschriebene Überwachung der Messeinrichtung, auf die noch näher eingegangen wird, insbesondere von der Recheneinrichtung durchgeführt. Dabei können Signale von Einrichtungen verwendet werden, die nicht Teil der Messeinrichtung sind. Insbesondere werden auf diese Weise Referenzwerte für alle von der Messeinrichtung gemessenen Drehraten und Linearbeschleunigungen ermittelt und zur Überwachung der Messwerte verwendet. Auch hierauf wird noch näher eingegangen. Bevorzugtermaßen werden die so überwachten Messwerte als Eingangsgrößen für die Berechnung weiterer Größen verwendet, z. B. von Größen wie Höhenstände bzw. Federwege von Rädern des Fahrzeuges gegenüber einem Fahrzeugaufbau, Achslasten und/oder Radlasten. Die Recheneinrichtung weist in diesem Fall eine Schnittstelle auf, über die die berechneten Werte der weiteren Größen an andere Einrichtungen und/oder Systeme übertragen werden können.

Weiterhin kann alternativ oder zusätzlich zu der Überwachung der zumindest einen Linearbeschleunigung zumindest eine der von der Messeinrichtung gemessenen Drehraten überwacht werden. Ein entsprechender Referenzwert oder Vergleichswert kann beispielsweise aus den von der Messeinrichtung gemessenen Beschleunigungswerten und zumindest einer zusätzlichen Größe ermittelt werden, wobei die zusätzliche Größe nicht aus Messwerten der Messeinrichtung ermittelt wird.

Beispielsweise kann:

- ein Referenzwert für die von der Messeinrichtung gemessene Giergeschwindigkeit aus der von der Messeinrichtung gemessenen Querbeschleunigung ermittelt werden und umgekehrt. Dabei wird zumindest der Lenkradwinkel oder der Lenkwinkel zumindest eines lenkbaren Rades verwendet;
- ein Referenzwert für die von der Messeinrichtung gemessene Giergeschwindigkeit aus der von der Messeinrichtung gemessenen Querbeschleunigung ermittelt werden und umgekehrt. Dabei wird zumindest die Fahrgeschwindigkeit in Längsrichtung des Fahrzeuges verwendet;
- ein Referenzwert für die von der Messeinrichtung gemessene Giergeschwindigkeit unter Verwendung des Lenkradwinkels oder des Lenkwinkels eines lenkbaren Rades und unter Verwendung der Fahrgeschwindigkeit in Längsrichtung des Fahrzeuges ermittelt werden;
- ein Referenzwert für die Längsbeschleunigung (Beschleunigung in Längsrichtung des Fahrzeuges) aus der Längsgeschwindigkeit ermittelt werden, wobei ein Korrekturterm verwendet wird, der unter Verwendung der Giergeschwindigkeit berechnet wird;
- ein Referenzwert für die Giergeschwindigkeit aus zumindest einer Drehzahl eines Rades des Fahrzeuges ermittelt werden. Dabei kann optional der Lenkradwinkel oder der Lenkwinkel zumindest eines lenkbaren Rades verwendet werden;
- ein Referenzwert für die Wankgeschwindigkeit aus der Querbeschleunigung unter zusätzlicher Verwendung der Fahrzeuglängsgeschwindigkeit und der Giergeschwindigkeit ermittelt werden;
- ein Referenzwert für die Nickgeschwindigkeit aus der Längsbeschleunigung unter zusätzlicher Verwendung der Fahrzeuglängsgeschwindigkeit und der Giergeschwindigkeit ermittelt werden;
- ein Referenzwert für die Wankgeschwindigkeit aus der Querbeschleunigung unter Verwendung eines Fahrzeugmodells berechnet werden, das die Relativbewegung von einem Fahrzeugaufbau und einem Fahrgestell näherungsweise beschreibt;
- ein Referenzwert für die Nickgeschwindigkeit aus der Längsbeschleunigung unter Verwendung eines Fahrzeugmodells berechnet werden, das die Relativbewegung von einem Fahrzeugaufbau und einem Fahrgestell näherungsweise beschreibt; und/oder
- Referenzwerte für die Vertikalbeschleunigung, die Wankgeschwindigkeit und die Nickgeschwindigkeit unter Verwendung von Signalen von Höhenstandssensoren an Rädern des Fahrzeuges ermittelt werden.

Bei entsprechenden Weiterbildungen der vorgeschlagenen Anordnung weist diese eine Fahrgeschwindigkeits-Bestimmungseinrichtung zur Bestimmung einer Fahrgeschwindigkeit des Radfahrzeuges auf, die mit der Überwachungseinrichtung verbunden ist, wobei die Überwachungseinrichtung ausgestaltet ist, die Vergleichsgröße unter Verwendung der Fahrgeschwindigkeit zu ermitteln. Insbesondere ist die Fahrgeschwindigkeits-Bestimmungseinrichtung ausgestaltet, die Fahrgeschwindigkeit unter Verwendung einer für eine Drehgeschwindigkeit eines Rades des Radfahrzeuges charakteristischen Größe zu bestimmen. Auch kann die Fahrgeschwindigkeits-Bestimmungseinrichtung mit einer Lenkwinkel-Bestimmungseinrichtung zur Bestimmung eines Lenkwinkels zumindest eines lenkbaren Rades des Radfahrzeuges verbunden sein, wobei die Fahrgeschwindigkeits-Bestimmungseinrichtung ausgestaltet ist, die Fahrgeschwindigkeit unter Verwendung des Lenkwinkels zu bestimmen. Weiterhin kann die Fahrgeschwindigkeits-Bestimmungseinrichtung mit der Messeinrichtung verbunden sein und derart ausgestaltet sein, dass die Fahrgeschwindigkeit unter Verwendung zumindest einer der drei Drehraten bestimmt wird.

Vorzugsweise weist die Messeinrichtung Beschleunigungssensoren zur Messung der drei Linearbeschleunigungen und Drehratensensoren zur Messung der drei Drehraten auf, wobei die Beschleunigungssensoren und die Drehratensensoren Teile einer vorgefertigten, zum Einbau in das Radfahrzeug ausgestalteten gerätetechnischen Einheit sind. Es handelt sich bei dieser Einheit um eine spezielle Ausführungsform einer IMU (Inertial Measurement Unit).

Weiterhin wird bevorzugt, dass die drei Linearbeschleunigungen von der Messeinrichtung als drei linear voneinander unabhängige Messgrößen messbar sind. Vorzugsweise bilden die Richtungen der jeweils von den Beschleunigungssensoren erfassten Beschleunigungen bzw. Beschleunigungskomponenten die Achsen eines dreidimensionalen rechtwinkligen Koordinatensystems. Insbesondere kann die Messeinrichtung derart ausgestaltet sein, dass zumindest die für die Messung der drei Linearbeschleunigungen verwendeten Sensoren nicht redundante Messgrößen liefern.

Entsprechendes wird für die Ausrichtung der drei Achsen bevorzugt, um die Drehbewegungen ausgeführt werden, deren Drehraten die Messeinrichtung misst. Mit anderen Worten: Die Messeinrichtung ist derart ausgestaltet, dass die drei Achsen jeweils paarweise senkrecht zueinander verlaufen.

Insbesondere kann die Überwachung der zumindest einen gemessenen Linearbeschleunigung unter Verwendung der Orientierung und unter Verwendung einer Vergleichsbeschleunigung durchgeführt werden. Dabei wird die Vergleichsbeschleunigung ohne Verwendung der von der Messeinrichtung gemessenen, zu überwachenden Linearbeschleunigung ermittelt. Es ist jedoch auch möglich, die zu überwachende Linearbeschleunigung in eine andere Größe umzurechnen und mit einer entsprechenden Vergleichsgröße zu vergleichen.

Insbesondere kann die Vergleichsgröße unter Verwendung einer relativen Position eines Fahrzeugaufbaus, an dem die Messeinrichtung befestigt ist oder zu befestigen ist, und eines Fahrwerks ermittelt werden. Die relative Position des Fahrzeugaufbaus und des Fahrwerks wird beispielsweise mit sogenannten Höhenstandssensoren gemessen, die den momentanen Höhenstand des Fahrzeugaufbaus über einem bezüglich eines Rades festliegenden Bezugspunkt messen. Der Höhenstand entspricht dem momentanen Federweg bei einer gefederten Aufhängung des Fahrzeugaufbaus.

Die Orientierungs-Bestimmungseinrichtung bestimmt die Orientierung des Fahrzeuges insbesondere durch Integration eines Gleichungssystems mit drei Gleichungen. Hierauf wird noch näher eingegangen. Auch kann die Orientierungsbestimmung durch Quaternionen erfolgen (siehe z. B. WO 01/57474 A1). Für die Integration kann lediglich die Veränderung der Position gegenüber einer Bezugsposition ermittelt werden. Daher wird vorgeschlagen, dass die Orientierungs-Bestimmungseinrichtung einen Stillstand des Radfahrzeuges detektiert und bei dem Stillstand unter Verwendung zumindest einer der von der Messeinrichtung gemessenen Linearbeschleunigungen Werte für eine insbesondere zukünftige Ermittlung der Orientierung bestimmt. Dabei ist es möglich, unter Verwendung der gemessenen effektiven Beschleunigung in Quer- und Längsrichtung des Fahrzeuges den Wankwinkel und den Nickwinkel absolut zu bestimmen und somit die Position relativ zu dem Koordinatensystem der Erde festzulegen. Der Gierwinkel (Winkel um die Vertikale) wird bei Fahrzeugstillstand beispielsweise auf Null gesetzt.

Weiterhin wird als Alternative oder zusätzliche Möglichkeit vorgeschlagen, eine Geradeausfahrt des Radfahrzeuges auf einem ebenen Untergrund zu detektieren und in dieser Fahrsituation unter Verwendung zumindest einer der von der Messeinrichtung gemessenen Linearbeschleunigungen Werte für eine insbesondere zukünftige Ermittlung der Orientierung zu bestimmen. Mit anderen Worten: es ist auch bei Geradeausfahrt auf ebenem Untergrund ein Abgleich des Wankwinkels und des Nickwinkels möglich.

Weiterhin wird als zusätzliche Möglichkeit vorgeschlagen, insbesondere in Fahrsituationen, in denen das Fahrzeug als stabil rollend (d. h. frei von Wank- und/oder Nickbewegungen) erkannt werden kann, Werte aus mindestens einer der gemessenen Beschleunigungskomponenten zu bestimmen, um damit in einem kurzen Zeitintervall ( beispielsweise mit einer Länge von wenigen Zehntelsekunden bis wenigen Sekunden, z. B. 2 Sekunden) einen Abgleich der Wank- bzw. der Nickwinkelbestimmung aus den Drehratensignalen durchzuführen. Diese Möglichkeit kann insbesondere dann genutzt werden, wenn das Fahrzeug über einen längeren Zeitraum nicht zum Stillstand kommt oder nicht auf ebenem Untergrund geradeaus fährt.

Die Erfindung wird nun anhand von Ausführungsbeispielen näher erläutert. Dabei wird Bezug auf die beigefügte schematische Zeichnung genommen und eine bevorzugte Ausführungsform beschrieben. Gleiche Bezugszeichen in der Zeichnung bezeichnen gleiche, funktionsgleiche oder äquivalente Einheiten oder Einrichtungen. Die einzelnen Figuren der Zeichnung zeigen:

Fig. 1    eine Anordnung zur Überwachung einer in einem Radfahrzeug angeordneten Messeinrichtung,

Fig. 2    ein Beispiel für eine Vergleichsgrößeneinrichtung, die gemäß einer bevorzugten Ausführungsform der Erfindung Teil der Fig. 1 dargestellten Anordnung sein kann,

Fig. 3    ein Beispiel gemäß einer bevorzugten Ausführungsform der Erfindung für eine Kombination der in Fig. 2 dargestellten Vergleichsgrößeneinrichtung mit Sensoren oder Einrichtungen zum Liefern von Informationen an die Vergleichsgrößeneinrichtung,

Fig. 4    ein Beispiel gemäß einer bevorzugten Ausführungsform der Erfindung für eine Kombination der in Fig. 1 dargestellten Orientierungs-Bestimmungseinrichtung mit weiteren Einrichtungen, um in bestimmten Fahrsituationen Ausgangswerte für die Orientierung des Fahrzeuges zu bestimmen,

Fig. 5    ein Beispiel gemäß einer bevorzugten Ausführungsform der Erfindung für eine Ausgestaltung der in Fig. 1 dargestellten Überwachungseinrichtung mit weiteren damit verbundenen Einrichtungen,

Fig. 6    eine Darstellung eines Straßenkraftfahrzeuges zur Erläuterung von Abmessungen und Winkeln und

Fig. 7    ein Beispiel für eine Ausgestaltung der in Fig. 1 dargestellten Messeinrichtung.

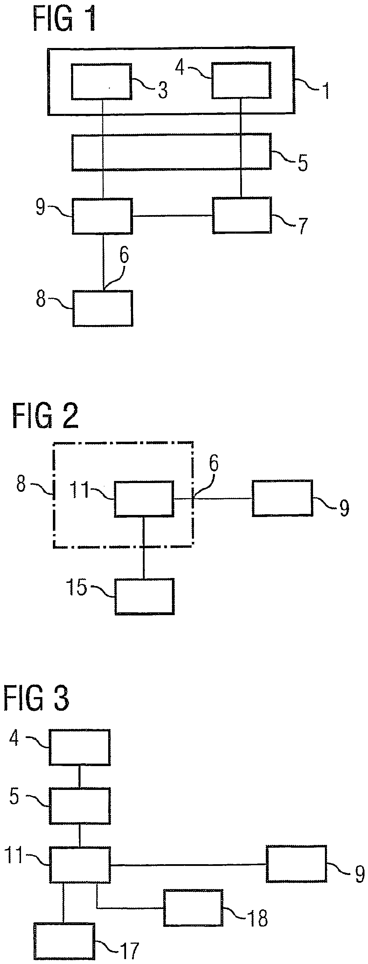

Die in Fig. 1 dargestellte Anordnung weist eine Messeinrichtung 1, eine Filtereinrichtung 5, eine Orientierungs-Bestimmungseinrichtung 7, eine Vergleichsgrößeneinrichtung 8 und eine Überwachungseinrichtung 9 auf. Die Messeinrichtung 1 weist wiederum eine Beschleunigungs-Messeinrichtung 3 und eine Drehraten-Messeinrichtung 4 auf. Die Messeinrichtung 1 ist insbesondere eine vorgefertigte bauliche Einheit, wobei die entsprechenden Messsensoren zur Messung der Beschleunigungen und Drehraten relativ zueinander positionsfest in der Einheit angeordnet sind. Anders als in Fig. 1 dargestellt kann die bautechnische Einheit weitere der in dieser Beschreibung genannten Einrichtungen und Einheiten aufweisen, insbesondere die Filtereinrichtung 5, die Orientierungs-Bestimmungseinrichtung 7 und/oder die Überwachungseinrichtung 9. Die bautechnische Einheit ist vorzugsweise dazu bestimmt, an oder in der Nähe des Schwerpunktes eines Kraftfahrzeuges befestigt zu werden, wobei eine bestimmte Ausrichtung in dem Kraftfahrzeug angestrebt wird.

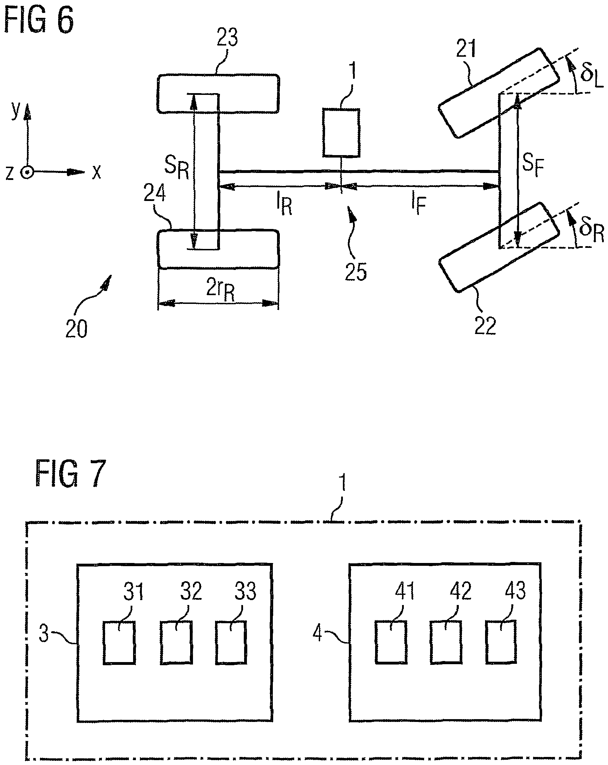

Insbesondere weist die Beschleunigungs-Messeinrichtung 3 drei Linear-Beschleunigungssensoren 31, 32, 33 auf (Fig. 7), die derart angeordnet sind, dass jeweils einer der Beschleunigungssensoren eine Beschleunigung oder Beschleunigungskomponente des Fahrzeuges in Richtung der Achsen eines kartesischen Koordinatensystems misst, wobei die x-Achse nach vorne in Längsrichtung des Fahrzeuges weist, die y-Achse quer zur Längsachse gerichtet ist und die z-Achse (bei horizontal ausgerichtetem Fahrzeug) senkrecht nach oben weist. Ein derartiges Koordinatensystem ist schematisch in Fig. 6 dargestellt. Diese Figur zeigt ein Straßenkraftfahrzeug 20 mit zwei lenkbaren Vorderrädern 21, 22 und zwei nicht lenkbaren Hinterrädern 23, 24. Die Vorderräder sind in dem dargestellten Zustand nach links eingeschlagen und weisen gegen die x-Achse einen Lenkwinkel von $\delta_L$ (linkes Vorderrad 21) bzw. $\delta_R$ (rechtes Vorderrad 22) auf. Die Vorderräder 21, 22 haben einen Abstand $s_F$, die Hinterräder 23, 24 einen Abstand $s_R$ voneinander. $r_R$ bezeichnet den Radius der Hinterräder 23, 24. In Längsrichtung etwa in der Mitte eines Fahrzeugaufbaus 25 ist die Messeinrichtung 1 angeordnet. Sie hat in Längsrichtung einen Abstand $l_F$ von der Achse der Vorderräder 21, 22 und einen Abstand $l_R$ von der Achse der Hinterräder 23, 24.

Die Erfindung ist nicht auf Radfahrzeuge mit Vorderradlenkung beschränkt. Vielmehr können z. B. zusätzlich auch die Hinterräder lenkbar sein.

Wieder unter Bezugnahme auf Fig. 1 ist die Beschleunigungs-Messeinrichtung 3 über die Filtereinrichtung 5 mit der Überwachungseinrichtung 9 verbunden. Die Drehraten-Messeinrichtung 4 ist über die Filtereinrichtung 5 mit der Orientierungs-Bestimmungseinrichtung 7 verbunden, die wiederum mit der Überwachungseinrichtung 9 verbunden ist. Außerdem ist die Vergleichsgrößeneinrichtung 8 mit der Überwachungseinrichtung 9 verbunden.

Die in Fig. 1 dargestellte Filtereinrichtung 5 steht stellvertretend für weitere Filtereinrichtungen, die zusätzlich bei den in Fig. 1 bis Fig. 5 dargestellten Anordnungen oder bei abgewandelten Anordnungen vorgesehen sein können. Die von den Filtereinrichtungen durchgeführte Filterung von Messsignalen und/oder daraus abgeleiteten Signalen dient insbesondere der Eliminierung von etwaig vorhandenem Rauschen und der Eliminierung von hochfrequenten Schwankungen der Messsignale, beispielsweise auf Grund von Vibrationen des Fahrzeugaufbaus. Die Filtereinrichtungen können insbesondere zumindest ein Tiefpassfilter und/oder zumindest ein Bandpassfilter aufweisen.

Die in Fig. 1 dargestellte Filtereinrichtung 5 filtert die von den Beschleunigungs-Messsensoren der Beschleunigungs-Messeinrichtung 3 gemessenen Beschleunigungssignale und die von den Drehraten-Messsensoren der Drehraten-Messeinrichtung 4 gemessenen Drehratensignale, bevor diese zu der Überwachungseinrichtung 9 bzw. zu der Orientierungs-Bestimmungseinrichtung 7 übertragen werden. Unter Verwendung einer über einen Ausgang 6 der Vergleichsgrößeneinrichtung 8 empfangenen Vergleichsgröße führt die Überwachungseinrichtung 9 eine Überwachung zumindest einer der drei gemessenen Beschleunigungsgrößen von der Beschleunigungs-Messeinrichtung 3 durch. Dabei verwendet die Überwachungseinrichtung 9, wie noch näher an einem Ausführungsbeispiel beschrieben wird, zumindest zwei Winkel (den Wankwinkel und den Nickwinkel des Fahrzeugs), die (neben dem Gierwinkel) ein Maß für die Orientierung des Fahrzeugs in einem erdfesten Koordinatensystem sind.

Wie Fig. 2 zeigt, kann die Vergleichsgrößeneinrichtung 8 eine Fahrgeschwindigkeits-Bestimmungseinrichtung 11 aufweisen, die mit einer Informationseinrichtung 15 und mit der Überwachungseinrichtung 9 verbunden ist. Von der Informationseinrichtung 15 empfängt die Fahrgeschwindigkeits-Bestimmungseinrichtung 11 Informationen wie zumindest einen Lenkwinkel eines lenkbaren Rades und Raddrehzahlen, insbesondere der nicht angetriebenen Räder des Fahrzeuges. Sie berechnet daraus die momentane Fahrgeschwindigkeit und übermittelt entsprechende Signale über den Ausgang 6 an die Überwachungseinrichtung 9. Die von der Informationseinrichtung 15 zu der Fahrgeschwindigkeits-Bestimmungseinrichtung 11 übertragenen Informationen können jedoch auch anderer Art sein und z. B. an Stelle der Raddrehzahlen Informationen über eine auf andere Weise ermittelte Fahrgeschwindigkeit des Fahrzeuges enthalten. Stehen neben den Raddrehzahlen und dem Lenkwinkel Informationen über Antriebsmomente und/oder Bremsmomente (und/oder äquivalente Größen, z. B. Bremskräfte) zur Verfügung, kann eine Schlupfkorrektur durchgeführt werden. Die auf Basis der Raddrehzahlen bestimmte Fahrgeschwindigkeit kann in diesem Fall auch beim Auftreten eines Schlupfes zwischen den Rädern und dem Untergrund des Fahrzeuges verwendet werden.

Fig. 3 zeigt eine dem Fall von Fig. 2 entsprechende Anordnung, bei der die Informationseinrichtung 15 durch eine Drehgeschwindigkeits-Ermittlungseinrichtung 17 zur Ermittlung der Drehgeschwindigkeit zumindest eines Rades des Fahrzeuges und durch eine Lenkwinkel-Ermittlungseinrichtung 18 zur Ermittlung eines Lenkwinkels zumindest eines lenkbaren Rades ausgestaltet ist. Außerdem ist die Fahrgeschwindigkeits-Bestimmungseinrichtung 11 über die Filtereinrichtung 5 mit der Drehraten-Messeinrichtung 4 verbunden und empfängt von dieser Informationen über mindestens eine der drei Drehraten (insbesondere die Gierrate) und berechnet unter Verwendung der zumindest einen Drehrate die Fahrgeschwindigkeit.

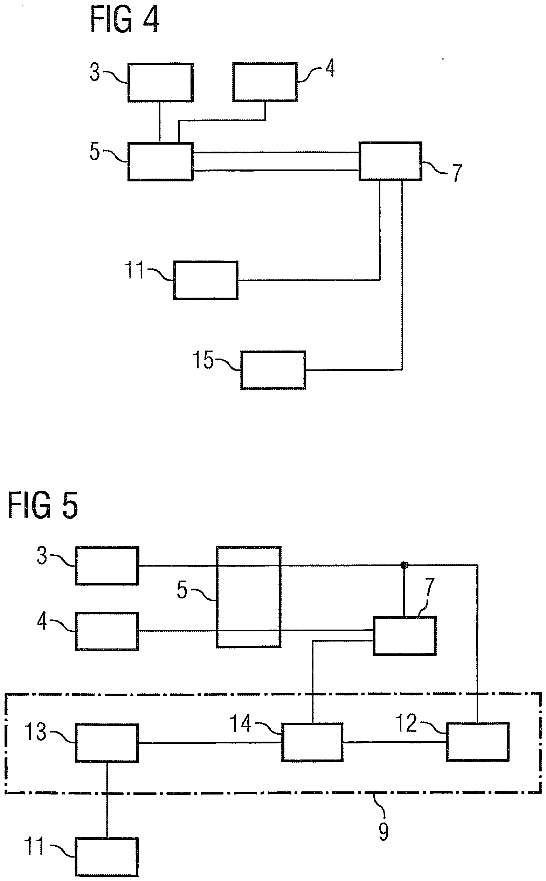

Die Anordnung gemäß Fig. 4 dient der Ermittlung von Startwerten für die Bestimmung der Fahrzeugorientierung in der Orientierungs-Bestimmungseinrichtung 7. Die Beschleunigungs-Messeinrichtung 3 und die Drehraten-Messeinrichtung 4 sind über die Filtereinrichtung 5 mit der Orientierungs-Bestimmungseinrichtung 7 verbunden. Weiterhin ist die Orientierungs-Bestimmungseinrichtung 7 mit der Fahrgeschwindigkeits-Bestimmungseinrichtung 11 und der Informationseinrichtung 15 verbunden.

Wenn die Orientierungs-Bestimmungseinrichtung 7 feststellt, dass die Fahrgeschwindigkeit Null ist, ermittelt sie, wie anhand eines Beispiels noch näher beschrieben wird, die Orientierung des Fahrzeuges und bestimmt daraus Startwerte für eine zukünftige Berechnung der Orientierung während der Fahrt des Fahrzeuges. Alternativ oder zusätzlich kann die in Fig. 4 gezeigte Anordnung zur Bestimmung der Startwerte während einer Geradeausfahrt bei konstanter Fahrgeschwindigkeit auf ebenem Untergrund eingesetzt werden.

Einen möglichen Aufbau der Überwachungseinrichtung 9 zeigt Fig. 5. Demgemäss weist die Überwachungseinrichtung 9 eine Beschleunigungs-Ermittlungseinrichtung 13, eine damit verbundene Orientierungs-Korrektureinrichtung 14 und eine Vergleichseinrichtung 12 auf, die ebenfalls mit der Orientierungs-Korrektureinrichtung 14 verbunden ist. Die Beschleunigungs-Ermittlungseinrichtung 13 ist mit der Fahrgeschwindigkeits-Bestimmungseinrichtung 11 verbunden. Die Orientierungs-Korrektureinrichtung 14 ist mit der Orientierungs-Bestimmungseinrichtung 7 verbunden. Die Vergleichseinrichtung 12 ist über die Filtereinrichtung 5 mit der Beschleunigungs-Messeinrichtung 3 verbunden.

Bei einer bestimmten Ausführungsform der in Fig. 5 dargestellten Anordnung ist die Beschleunigungs-Ermittlungseinrichtung 13 über die Filtereinrichtung 5 mit der Drehraten-Messeinrichtung 4 verbunden, um bei der Berechnung der Fahrzeug-Beschleunigung in Längsrichtung und in Querrichtung die gemessene Gierrate verwenden zu können. Es ist jedoch auch möglich, die Gierrate auf andere Weise zu bestimmen und bei der Berechnung der Beschleunigung zu verwenden. Z. B. kann die Gierrate aus der Fahrzeuggeschwindigkeit in Längsrichtung und dem Lenkwinkel bestimmt werden.

Alternativ zu dem in Fig. 5 gezeigten Aufbau können beispielsweise die Vergleichseinrichtung 12 und die Orientierungs-Korrektureinrichtung 14 miteinander vertauscht sein.

Beim Betrieb der Überwachungseinrichtung 9 empfängt diese Fahrgeschwindigkeitswerte von der Fahrgeschwindigkeits-Bestimmungseinrichtung 11, berechnet daraus in der Beschleunigungs-Ermittlungseinrichtung 13 Beschleunigungswerte ohne Verwendung von Informationen von der Beschleunigungs-Messeinrichtung 3 oder (ggf. mit Ausnahme der Gierrate) von der Drehraten-Messeinrichtung 4 und überträgt die ermittelten Beschleunigungswerte zu der Orientierungs-Korrektureinrichtung 14. Dort werden die ermittelten wirklichen Beschleunigungswerte des Fahrzeuges in effektive Beschleunigungswerte umgerechnet, wobei zumindest Komponenten der von der Orientierungs-Bestimmungseinrichtung 7 ermittelten Fahrzeugorientierung verwendet werden. In der Vergleichseinrichtung 12 werden dann die so ermittelten Referenzwerte für die effektive Beschleunigung mit den von der Beschleunigungs-Messeinrichtung 3 gemessenen Werten verglichen.

Insbesondere wenn das Fahrzeug über einen längeren Zeitraum hinweg nicht zum Stillstand kommt und das Fahrzeug in dem Zeitraum auch nicht geradeaus auf ebenem Untergrund fährt, wird in einem kurzen Zeitintervall von z. B. 1 bis 3 Sekunden Länge, in dem erkannt wird, dass das Fahrzeug stabil (d. h. insbesondere bei guter Haftreibung der Räder) rollt, ein Abgleich der Fahrzeugorientierungsbestimmung auf folgende Weise vorgenommen: die von der Beschleunigungs-Ermittlungseinrichtung 13 ermittelten Beschleunigungswerte werden von den durch die Filtereinrichtung 5 gefilterten Messwerten der Beschleunigungs-Messeinrichtung 3 subtrahiert. Diese Differenzen werden zum Abgleich der Fahrzeugorientierung so behandelt wie die von der Filtereinrichtung 5 gefilterten Messwerte der Beschleunigungs-Messeinrichtung 3 im Falle des stehenden Fahrzeuges.

Es wird nun ein konkretes Ausführungsbeispiel für die Überwachung näher beschrieben.

Zur Bestimmung der Fahrzeugorientierung wird aus den gefilterten, von der Drehraten-Messeinrichtung gemessenen Drehraten die momentane Orientierung des Fahrzeuges berechnet und zwar durch Ermittlung des Wankwinkels (Winkel einer Drehbewegung um die x-Achse), des Nickwinkels (Winkel einer Drehbewegung um die y-Achse) und des Gierwinkels (Winkel einer Drehbewegung um die z-Achse). Der Wankwinkel, der Nickwinkel und der Gierwinkel sind insbesondere die gemäß der Deutschen Industrienorm (DIN) 70000 definierten Winkel.

Die Winkel werden insbesondere durch Integration des folgenden Gleichungssystems ermittelt:

$$\dot{\varphi} = \omega_x + \left(\omega_y \sin\varphi + \omega_z \cos\varphi\right)\tan\theta$$

$$\dot{\theta} = \omega_y \cos\varphi - \omega_z \sin\varphi$$

$$\dot{\psi} = \left(\omega_y \sin\varphi + \omega_z \cos\varphi\right)/\cos\theta$$

wobei $\varphi$ der Wankwinkel ist, $\theta$ der Nickwinkel ist, $\psi$ der Gierwinkel ist und $\omega$ die gemessene Drehrate um die im Index der jeweiligen Größe angegebene Koordinatenachse des fahrzeugeigenen Koordinatensystems ist.

Alternativ werden die Winkel beispielsweise gemäß dem oben genannten Verfahren der Quaternionen aus mehr als drei Differentialgleichungen bestimmt.

Zum Abgleich der Winkelwerte wird zunächst optional eine Konsistenzprüfung durchgeführt, bei der geprüft wird, ob die Summe der Quadrate der drei gemessenen Linearbeschleunigungen in einer definierten Bandbreite um das Quadrat der Gravitationskonstante g der Erdanziehung liegt. Für die Praxis reicht es aus, g = 9,81 m/s$^2$ zu setzen und eine Toleranzschwelle für eine maximale Abweichung vorzugeben. Die Toleranzschwelle hängt insbesondere von der Qualität der Signale der Beschleunigungssensoren ab. Dabei können insbesondere nach der Filterung durch die Filtereinrichtung 5 nochmals gefilterte Beschleunigungssignale verwendet werden. Wird der Konsistenztest nicht bestanden, wird auf einen Fehler bei der Messung der Beschleunigungswerte geschlossen und es können entsprechende Maßnahmen ergriffen werden (z. B. Sperrung der Systeme, die zumindest einen der gemessenen Beschleunigungswerte als Eingangsgröße verwenden). Zunächst kann jedoch auch lediglich ein Fehler vermerkt werden und der Konsistenztest wiederholt werden.

Nach erfolgreichem Konsistenztest oder wenn ein Konsistenztest nicht durchgeführt wird, werden der Wankwinkel und der Nickwinkel gemäß den folgenden Beziehungen berechnet:

$$\theta = \arcsin(\langle a_x \rangle / g)$$

$$\varphi = \arctan(\langle a_y / a_z \rangle)$$

wobei $\langle\ldots\rangle$ einen zeitlichen Mittelwert über ein Zeitintervall bedeutet, während dem das Fahrzeug stillsteht, und wobei $\alpha_x, \alpha_y, \alpha_z$ die von der Messeinrichtung gemessenen effektiven Beschleunigungswerte in Richtung der x-Achse, y-Achse bzw. z-Achse des fahrzeugeigenen Koordinatensystems sind. Der Gierwinkel wird beispielsweise durch das Einschalten der Zündung eines Kraftfahrzeuges nach einer Betriebspause auf Null gesetzt. Er bleibt während dem Fahrzeugstillstand unverändert.

Der Fahrzeugstillstand kann beispielsweise durch eines der folgenden Kriterien oder durch Kombination der beiden folgenden Kriterien festgestellt werden:

- Alle gemessenen Drehzahlen der Räder des Fahrzeuges sind Null.
- Die auf andere Weise als durch Auswertung der Drehzahlen von Rädern ermittelte Fahrzeuggeschwindigkeit ist Null.

Zusätzlich können folgende Kriterien festgestellt werden:

- An allen angetriebenen Rädern ist das angreifende Antriebsmoment Null.

- Eine Fahrzeugbremse zum Bremsen einer Fahrbewegung des Fahrzeuges ist aktiv.

Vorzugsweise werden alle diese Kriterien gleichzeitig für die Bestimmung des Fahrzeugstillstandes herangezogen.

Weiterhin wird während der Fahrt des Fahrzeuges überprüft, ob das Fahrzeug mit konstanter Geschwindigkeit geradeaus auf ebenem Untergrund fährt. Diese Fahrsituation wird durch Prüfung der folgenden Kriterien erkannt:

- Der Lenkwinkel aller lenkbaren Räder des Fahrzeuges ist Null. Alternativ kann beispielsweise der Lenkradwinkel daraufhin geprüft werden, ob er Null ist.
- Alle drei von der Drehraten-Messeinrichtung gemessenen Drehraten sind Null.
- Der Wert der von der Beschleunigungs-Messeinrichtung gemessenen Querbeschleunigung (y-Richtung) verändert sich nicht.

Sind diese Kriterien erfüllt, werden der Wankwinkel und der Nickwinkel gemäß den zuvor angegebenen Beziehungen neu berechnet.

Die bei Fahrzeugstillstand und/oder bei der Fahrt mit konstanter Geschwindigkeit geradeaus auf ebener Fahrbahn ermittelten Werte für den Wankwinkel und den Nickwinkel werden als Startwerte für die bei der Integration des zuvor angegebenen Gleichungssystems mit drei Gleichungen verwendet. Folglich ist es möglich, den Wankwinkel und den Nickwinkel bezüglich des erdfesten Koordinatensystems anzugeben. Dies erlaubt es, die gemessenen effektiven Beschleunigungswerte in wirkliche Beschleunigungswerte umzurechnen und/oder eine entsprechende Umrechnung für die Überwachung der gemessenen Werte durchzuführen, wie noch näher erläutert wird.

Es wird nun beschrieben, wie aus der Fahrgeschwindigkeit des Fahrzeuges (in Längsrichtung und quer zur Längsrichtung, d. h. die x-Komponente und die y-Komponente der Fahrgeschwindigkeit des fahrzeugeigenen Koordinatensystems) Referenzwerte für die gemessene Querbeschleunigung und die gemessene Längsbeschleunigung ermittelt werden können.

Hierfür gibt es unterschiedliche Möglichkeiten, die abhängig von den Eigenschaften des Fahrzeuges und von den sonstigen Voraussetzungen einzeln oder in Kombination genutzt werden können.

Wenn die Vorderräder eines Fahrzeuges nicht angetrieben sind, werden bevorzugtermaßen die Raddrehzahlen der Vorderräder gemäß den folgenden Beziehungen zur Bestimmung der Fahrzeuglängsgeschwindigkeit (Index x) und zur Bestimmung der Fahrzeugquergeschwindigkeit (Index y) herangezogen:

$$v_x = \frac{1}{2} r_F \left( n_{FL} \cos \delta_L + n_{FR} \cos \delta_R \right)$$

$$v_y = \frac{1}{2} r_F \left( n_{FL} \sin \delta_L + n_{FR} \sin \delta_R \right) - \omega_z l_F$$

wobei v die jeweilige Komponente der Fahrzeuggeschwindigkeit in x-Richtung bzw. y-Richtung ist, $r_F$ der Radius der Vorderräder, n die jeweilige Raddrehzahl ist (wobei der erste Index F "Vorderrad", der zweite Index L "links" bedeutet und der zweite Index R "rechts" bedeutet), δ der Lenkwinkel des jeweiligen Rades ist (wobei der Index L "links" bedeutet und der Index R "rechts" bedeutet), $l_F$ der anhand von Fig. 6 beschriebene Abstand der Messeinrichtung in x-Richtung von der Vorderachse des Fahrzeuges ist und $\omega_z$ die Gierrate des Fahrwerks ist. Die Gierrate des Fahrwerks kann beispielsweise aus folgender Beziehung berechnet werden:

$$\omega_z = \frac{r_F}{s_F} \left( n_{FL} \cos \delta_L - n_{FR} \cos \delta_R \right)$$

wobei $s_F$ der anhand von Fig. 6 erläuterte Abstand der beiden Vorderräder ist. Optional wird der so berechnete Wert der Gierrate mit den von der Drehraten-Messeinrichtung berechneten Werten der Gierrate verglichen. Liegt die Abweichung zwischen diesen beiden Größen über einem Grenzwert, so wird entschieden, dass die Raddrehzahlen zumindest zeitweise nicht für die Berechnung der Fahrgeschwindigkeit verwendet werden können. Ein Grund hierfür ist beispielsweise ein zu großer Schlupf zwischen den Rädern und dem Untergrund. Stehen keine weiteren Möglichkeiten zur Bestimmung der Fahrgeschwindigkeit zur Verfügung, wird die Überwachung der gemessenen Beschleunigungswerte unterbrochen. Jedoch kann alternativ zu der Unterbrechung eine Schlupfkorrektur durchgeführt werden, so dass die korrigierte Fahrgeschwindigkeit verwendet werden kann.

Die Überwachung kann ebenfalls unterbrochen werden, wenn ein Antiblockiersystem (ABS) oder ein anderes System vorhanden ist, das die Haftung zumindest eines der Räder mit dem Untergrund detektieren kann. Meldet ein solches System mangelnde Haftung oder zumindest die Möglichkeit, dass die Haftung kurzzeitig unterbrochen ist, wird die aus den Raddrehzahlen gewonnene Information bei einer Ausführungsform nicht für die Überwachung verwendet. Entsprechendes kann auch für die folgende Möglichkeit der Bestimmung der Fahrgeschwindigkeit bei nicht angetriebenen Hinterrädern gelten. Die Überwachung kann jedoch fortgesetzt werden, wenn weitere Informationen zur Bestimmung der Fahrgeschwindigkeit zur Verfügung stehen. Zum Beispiel kann aus Informationen über Rad-Antriebsmomente und Bremsmomente ein Wert für die Fahrgeschwindigkeit ermittelt werden.

Sind die Hinterräder des Fahrzeuges nicht angetrieben, so werden folgende Beziehungen zur Bestimmung der Fahrgeschwindigkeit verwendet:

$$v_x = \frac{1}{2} r_R (n_{RL} + n_{RR})$$

$$v_y = \omega_z l_R$$

wobei $r_R$ der anhand von Fig. 6 erläuterte Radius der Hinterräder ist, n die jeweilige Raddrehzahl ist (wobei der erste Index R "Hinterrad", der zweite Index L "links" bedeutet und der zweite Index R "rechts" bedeutet) und wobei $l_R$ der anhand von Fig. 6 erläuterte Abstand der Messeinrichtung 1 in Längsrichtung von der Hinterachse des Fahrzeuges ist. Die Messeinrichtung ist am Schwerpunkt des Fahrzeuges angeordnet. Für die Gierrate des Fahrwerks wird ein Wert gemäß der folgenden Beziehung berechnet:

$$\omega_z = \frac{r_R}{s_R} (n_{RL} - n_{RR})$$

Im Übrigen kann genauso wie bei der zuvor beschriebenen Verfahrensweise zur Bestimmung der Fahrgeschwindigkeit verfahren werden.

Optional werden vorzugsweise noch Schräglaufkorrekturen gemäß einem Ein-Spur-Modell an der Fahrgeschwindigkeit vorgenommen, insbesondere wenn Informationen über die Antriebsmomente und Bremsmomente der Vorderräder verfügbar sind. Weiterhin wird für die Schräglaufkorrekturen die Gierbeschleunigung benötigt, die durch Bildung der zeitlichen Ableitung der von der Drehraten-Messeinrichtung gemessenen Gierrate bestimmt wird. Bei der Bildung der Ableitung kann eine weitere Filterung erfolgen.

Bei einer weiteren Möglichkeit, die Fahrzeuggeschwindigkeit zu bestimmen, werden keine Informationen über die Drehgeschwindigkeit der Räder verwendet, sondern wird die Fahrzeugquergeschwindigkeit nach folgender Beziehung berechnet:

$$v_y = v_x \tan \delta - \omega_z l_F$$

wobei $\delta$ ein mittlerer Lenkwinkel (insbesondere der arithmetische Mittelwert aus dem Lenkwinkel des rechten und des linkes Vorderrades) und $\omega_z$ der von der Drehraten-Messeinrichtung gemessene Wert der Gierrate ist. Für die Beziehung wird die Fahrgeschwindigkeit $v_x$ in Längsrichtung (x-Richtung) aus einer anderen Informationsquelle verwendet.

Aus der Längsgeschwindigkeit und der Quergeschwindigkeit des Fahrzeuges werden nun gemäß den folgenden Beziehungen die wirkliche Längsbeschleunigung und die wirkliche Querbeschleunigung des Fahrzeuges berechnet:

$$a_x = \dot{v}_x - \omega_z v_y$$

$$a_y = \dot{v}_y + \omega_z v_x$$

Dabei sind $\dot{v}_x$ und $\dot{v}_y$ die ersten zeitlichen Ableitungen der Fahrgeschwindigkeit in x-Richtung bzw. y-Richtung. Bei der Bildung der zeitlichen Ableitungen wird eine weitere Filterung durchgeführt. Für die in diesen Beziehungen vorkommenden Gierraten des Fahrwerks werden insbesondere die gefilterten Messsignale der Drehraten-Messeinrichtung verwendet.

Aus der so ermittelten wirklichen Längsbeschleunigung und der wirklichen Querbeschleunigung werden mit Hilfe des momentanen Wankwinkels und des momentanen Nickwinkels Referenzwerte für die effektive Längsbeschleunigung $a_x^{(R)}$ und für die effektive Querbeschleunigung $a_y^{(R)}$ gemäß den folgenden Beziehungen berechnet:

$$a_x^{(R)} = a_x - g \sin\theta$$

$$a_y^{(R)} = a_y + g \sin\varphi \cos\theta$$

Anschließend werden die Vergleichswerte mit den gefilterten Signalen der von der Beschleunigungs-Messeinrichtung gemessenen Längsbeschleunigung und Querbeschleunigung (in x-Richtung und in y-Richtung) verglichen. Übersteigt der Betrag der Differenz zwischen dem Vergleichswert und dem Messwert in zumindest einer der beiden Richtungen einen vorgegebenen Grenzwert, so wird eine Maßnahme ergriffen. Insbesondere wird der Wert eines Fehlerzähler heraufgesetzt. Dabei kann der Betrag, um den der Wert erhöht wird, optional abhängig von der Neigung des Fahrzeuges (Wankwinkel und/oder Nickwinkel) sowie abhängig von der Längsgeschwindigkeit und/oder anderen Größen sein. Tritt über ein Zeitintervall vorgegebener Länge kein Fehler auf (d. h. wird der vorgegebene Grenzwert nicht überschritten), wird der Wert des Fehlerzählers um einen vorgegebenen Betrag herabgesetzt. Dabei kann der Wert des Fehlerzählers nicht kleiner als Null werden. Zum Beispiel wird ein Vorhandensein eines Fehlers festgestellt, wenn der Wert des Fehlerzählers einen vorgegebenen Grenzwert erreicht oder überschreitet. Insbesondere kann der Grenzwert abhängig sein von bestimmten Fahrsituationen und/oder Größen, die diese Fahrsituationen charakterisieren.

Zur Überwachung der in z-Richtung von der Beschleunigungs-Messeinrichtung gemessenen Beschleunigung wird folgende Vorgehensweise vorgeschlagen: Es wird unter Verwendung zumindest einer relativen Position in z-Richtung des fahrzeugeigenen Koordinatensystems zwischen einem Fahrwerk und einem Fahrzeugaufbau des Fahrzeuges ein Vergleich des Messwertes oder einer daraus abgeleiteten Größe mit einer Vergleichsgröße durchgeführt. Vorzugsweise wird die relative Position gemessen, insbesondere mit zumindest einem Höhenstandssensor.

Bei einer konkreten Ausführungsform wird hierzu der Höhenstand (siehe oben) aller vier Räder des Fahrzeuges verwendet.

Zunächst wird die Größe $z_M$ gemäß folgender Gleichung berechnet:

$$z_M = \frac{1}{2}\left[ p(h_{FL} + h_{FR}) + (1-p)(h_{RL} + h_{RR}) \right]$$

wobei die (erste) Größe $z_M$ ein gewichtetes Mittel der Höhenstände h (wobei die doppelten Indizes wie bei den Raddrehzahlen aufzufassen sind) darstellt und wobei p ein spezifisch für das jeweilige Fahrzeug oder den Fahrzeugtyp gewählter Parameter ist. Nun wird die Größe zweimal nach der Zeit differenziert und optional dabei gefiltert. Weiterhin wird optional eine zweite Größe $a_M$ gemäß der folgenden Gleichung berechnet:

$$a_M = -\Omega^2 z_M - \Gamma \dot{z}_M$$

wobei $\Omega^2$ und r spezifisch für das Fahrzeug oder den Fahrzeugtyp gewählte Parameter sind. Die zweite Ableitung der ersten Größe $z_M$ und die zweite Größe $a_M$ werden mit der folgenden Vergleichsgröße verglichen, die aus der von der Messeinrichtung gemessenen Beschleunigung in z-Richtung (fahrzeugeigenes Koordinatensystem) berechnet wird:

$$a_z^{(R)} = a_z - g\cos\varphi\cos\theta$$

wobei $a_z^{(R)}$ eine wirkliche Beschleunigung ist, die gemessene Beschleunigung $\alpha_z$ hingegen eine effektive Beschleunigung ist.

Weiterhin besteht die Möglichkeit, zur Überwachung der in z-Richtung von der Beschleunigungs-Messeinrichtung gemessenen Beschleunigung die in x-Richtung und y-Richtung gemessenen Beschleunigungen zu verwenden. Bei Vernachlässigung der z-Komponente des Fahrzeuggeschwindigkeitsvektors gilt die Relation

$$\left(a_z - v_y\omega_x + v_x\omega_y\right)^2 = g^2 - \left(a_x - \dot{v}_x + v_y\omega_z\right)^2 - \left(a_y - \dot{v}_y - v_x\omega_z\right)^2$$

wobei $\alpha_x, \alpha_y, \alpha_z$ die gemessenen effektiven Beschleunigungen sind und $\omega_x, \omega_y, \omega_z$ die Wank-, Nick- bzw. Gierrate bedeuten. Die in die obige Relation eingehende Fahrzeuglängsgeschwindigkeit wird auf die zuvor beschriebene Weise ermittelt. Die Fahrzeugquergeschwindigkeit $v_y$ kann beispielsweise wie zuvor beschrieben ermittelt werden. Insbesondere können Informationen über die Drehgeschwindigkeit der nicht angetriebenen Räder verwendet werden. Alternativ oder zusätzlich kann die Fahrzeugquergeschwindigkeit auf die ebenfalls bereits beschriebene Weise ermittelt werden, wobei zum Beispiel außer der Fahrzeuglängsgeschwindigkeit ein mittlerer Lenkwinkel und der von der Drehraten-Messeinrichtung gemessene Wert der Gierrate verwendet werden.

Insbesondere werden bei dem Vergleich ein Zeitintervall und ein Grenzwert definiert. Ist der Betrag der berechneten effektiven Beschleunigung $a_z$ größer als der Grenzwert und ist weder der Betrag der zweiten zeitlichen Ableitung der ersten Größe $z_M$ noch der Betrag der zweiten Größe $a_M$ größer als der Grenzwert, so wird auf einen Fehler geschlossen (z.B. ein Wert eines Fehlerzählers um eins erhöht).

Gemäß einem weiteren Aspekt kann aus den Messwerten der Messeinrichtung die Fahrgeschwindigkeit des Fahrzeugs ermittelt werden. Diese Verfahrensweise ist insbesondere dann von Vorteil, wenn alle Räder des Fahrzeuges angetrieben werden und/oder wenn aus den Drehzahlen nicht angetriebener Räder in bestimmten Fahrsituationen nicht zuverlässig die Fahrgeschwindigkeit bestimmt werden kann (z.B. bei schleuderndem Fahrzeug). Eine derartige Situation kann beispielsweise dadurch erkannt werden, dass große Abweichungen zwischen den insbesondere gefilterten Signalen der Sensoren für die Längsbeschleunigung und die Querbeschleunigung einerseits und den oben beschriebenen Referenzwerten andererseits auftreten.

Die Fahrgeschwindigkeitskomponente $v_x$ in x-Richtung und die die Fahrgeschwindigkeitskomponente $v_y$ in y-Richtung können dann durch Integration des folgenden Gleichungssystems bestimmt werden:

$$\dot{v}_x = a_x + \omega_z v_y$$

$$\dot{v}_y = a_y - \omega_z v_x$$

Dabei sind die Beschleunigungen $a_x$ bzw. $a_y$ in x-Richtung bzw. in y-Richtung und die Gierrate $\omega_z$ insbesondere die von der Messeinrichtung gemessenen Größen. Der Betrag der Fahrgeschwindigkeit kann dann aus den Fahrgeschwindigkeitskomponenten berechnet werden. Auch kann das Vorzeichen der Fahrgeschwindigkeit bestimmt werden, da die Information über das Vorzeichen aus den gemessenen Größen bekannt ist.

Insbesondere kann diese Verfahrensweise der Bestimmung der Fahrgeschwindigkeit vorübergehend angewendet werden. In diesem Fall beginnt die Integration vorzugsweise zu einem Zeitpunkt, zu dem die Fahrsituation noch eine Bestimmung der Fahrgeschwindigkeit auf andere Weise, z. B. auf Basis der Raddrehzahlen erlaubt. Diese Fahrgeschwindigkeitswerte können dann als Anfangswerte für die Integration verwendet werden.

Alternativ können die Fahrzeuggeschwindigkeit und die Fahrzeugorientierung simultan durch ein adaptives Kalman-Filter bestimmt werden, in das die x-Komponente und die y-Komponente des Vektors der Fahrzeuggeschwindigkeit sowie der Wank- und Nickwinkel eingehen. Zusätzlich gehen die drei Komponenten der Beschleunigung, insbesondere die vier Raddrehzahlen und der Lenkwinkel (z. B. der Lenkradwinkel) als Messgrößen in das Kalman-Filter ein. Insbesondere erfolgt eine permanente Bewertung der Raddrehzahlen, die wiederum dazu verwendet wird, Rückführungskoeffizienten des Filters zu beeinflussen.

**Patentansprüche**

1. Anordnung zur Überwachung einer in einem Radfahrzeug (20) angeordneten Messeinrichtung (1), mit

   - der Messeinrichtung (1), wobei die Messeinrichtung (1) ausgestaltet ist, drei jeweils quer zueinander gerichtete Linearbeschleunigungen des Radfahrzeuges (20) und drei Drehraten, jeweils einer Drehbewegung oder einer Komponente einer Drehbewegung um eine Achse des Radfahrzeuges (20), zu messen, wobei die drei Achsen jeweils quer zueinander verlaufen,
   - einer Orientierungs-Bestimmungseinrichtung (7), die ausgestaltet ist, aus den drei Drehraten eine Orientierung des Radfahrzeuges (20) in einem fahrzeugexternen Koordinatensystem zu bestimmen, **dadurch gekennzeichnet, dass** eine Überwachungseinrichtung (9) vorgesehen ist, die ausgestaltet ist, unter Verwendung einer Ausgangsgröße der Orientierungs-Bestimmungseinrichtung (7) und unter Verwendung einer Vergleichsgröße eine Überwachung zumindest einer der gemessenen Linearbeschleunigungen und einer der gemessenen Drehraten durchzuführen, wobei

     • die Vergleichsgröße für die Längsbeschleunigng mit Hilfe der Raddrehzahl (n) und des Lenkwinkels ($\delta$) bestimmt wird,
     • die Vergleichsgröße für die Querbeschleunigung mit Hilfe der Raddrehzahl (n), des Lenkwinkels ($\delta$) und der Gierrate ($\omega$) bestimmt wird und
     • die Vergleichsgröße für die Vertikalbeschleunigung mit Hilfe der relativen Position zwischen einem Fahrwerk und eine Fahrzeugaufbau des Fahrzeugs bestimmt wird und wobei
     • die Vergleichsgröße für die Gierrate ($\omega$) mit Hilfe der Raddrehzahl (n) und des Lenkwinkels ($\delta$) bestimmt wird.

2. Anordnung nach Anspruch 1, mit einer Fahrgeschwindigkeits-Bestimmungseinrichtung (11) zur Bestimmung einer Fahrgeschwindigkeit des Radfahrzeuges (20), die mit der Überwachungseinrichtung (9) verbunden ist, wobei die Überwachungseinrichtung (9) ausgestaltet ist, die Vergleichsgröße unter Verwendung der Fahrgeschwindigkeit zu ermitteln.

3. Anordnung nach Anspruch 2, wobei die Fahrgeschwindigkeits-Bestimmungseinrichtung (11) ausgestaltet ist, die Fahrgeschwindigkeit unter Verwendung einer für eine Drehgeschwindigkeit eines Rades des Radfahrzeuges (20) charakteristischen Größe zu bestimmen.

4. Anordnung nach Anspruch 2 oder 3, wobei die Fahrgeschwindigkeits-Bestimmungseinrichtung (11) mit einer Lenkwinkel-Bestimmungseinrichtung (15) zur Bestimmung eines Lenkwinkels zumindest eines lenkbaren Rades (21, 22) des Radfahrzeuges (20) verbunden ist und wobei die Fahrgeschwindigkeits-Bestimmungseinrichtung (11) ausgestaltet ist, die Fahrgeschwindigkeit unter Verwendung des Lenkwinkels zu bestimmen.

5. Anordnung nach einem der Ansprüche 2 bis 4, wobei die Fahrgeschwindigkeits-Bestimmungseinrichtung (11) mit der Messeinrichtung (1) verbunden ist und ausgestaltet ist, die Fahrgeschwindigkeit unter Verwendung zumindest einer der drei Drehraten zu bestimmen.

6. Anordnung nach einem der Ansprüche 1 bis 5, wobei die Messeinrichtung (1) Beschleunigungssensoren (31, 32, 33) zur Messung der drei Linearbeschleunigungen und Drehratensensoren (41, 42, 43) zur Messung der drei Drehraten aufweist und wobei die Beschleunigungssensoren (31, 32, 33) und die Drehratensensoren Teile einer vorgefertigten, zum Einbau in das Radfahrzeug (20) ausgestalteten gerätetechnischen Einheit (1) sind.

7. Anordnung nach einem der Ansprüche 1 bis 6, wobei die Messeinrichtung (1) derart ausgestaltet ist, dass die drei Linearbeschleunigungen als drei linear voneinander unabhängige Messgrößen messbar sind.

8. Anordnung nach einem der Ansprüche 1 bis 7, wobei die Messeinrichtung (1) derart ausgestaltet ist, dass die drei Achsen jeweils paarweise senkrecht zueinander verlaufen.

9. Anordnung nach einem der Ansprüche 1 bis 8, wobei die Überwachungseinrichtung (9) ausgestaltet ist, die Überwachung unter Verwendung der Orientierung und unter Verwendung einer Vergleichsbeschleunigung durchzuführen, und ausgestaltet ist, die Vergleichsbeschleunigung ohne Verwendung der von der Messeinrichtung (1) gemessenen, zu überwachenden Linearbeschleunigung zu ermitteln.

10. Anordnung nach einem der Ansprüche 1 bis 9, wobei die Überwachungseinrichtung (9) ausgestaltet ist, die Vergleichsgröße unter Verwendung einer relativen Position eines Fahrzeugaufbaus (25), an dem die Messeinrichtung (1) befestigt ist oder zu befestigen ist, und eines Fahrwerks (21, 22, 23, 24) zu ermitteln.

11. Anordnung nach einem der Ansprüche 1 bis 10, wobei die Orientierungs-Bestimmungseinrichtung (7) ausgestaltet ist, einen Stillstand des Radfahrzeuges (20) zu detektieren und bei dem Stillstand unter Verwendung zumindest einer der von der Messeinrichtung (1) gemessenen Linearbeschleunigungen Werte für eine insbesondere zukünftige Ermittlung der Orientierung zu bestimmen.

12. Anordnung nach einem der Ansprüche 1 bis 11, wobei die Orientierungs-Bestimmungseinrichtung (7) ausgestaltet ist, eine Geradeausfahrt des Radfahrzeuges (20) auf einem ebenen Untergrund zu detektieren und in dieser Fahrsituation unter Verwendung zumindest einer der von der Messeinrichtung (1) gemessenen Linearbeschleunigungen Werte für eine insbesondere zukünftige Ermittlung der Orientierung zu bestimmen.

13. Verfahren zur Überwachung einer in einem Radfahrzeug (20) angeordneten Messeinrichtung (1), wobei die Messeinrichtung (1) ausgestaltet ist, drei jeweils quer zueinander gerichtete Linearbeschleunigungen des Radfahrzeuges (20) und drei Drehraten, jeweils einer Drehbewegung oder einer Komponente einer Drehbewegung um eine Achse des Radfahrzeuges (20), zu messen, wobei die drei Achsen jeweils quer zueinander verlaufen und wobei

- aus den drei Drehraten zumindest Komponenten einer Orientierung des Radfahrzeuges (20) in einem fahrzeugexternen Koordinatensystem bestimmt werden, **dadurch gekennzeichnet, dass** unter Verwendung zumindest der Komponenten der Orientierung und unter Verwendung einer Vergleichsgröße eine Überwachung zumindest einer der gemessenen Linearbeschleunigungen und einer der gemessenen Drehraten durchgeführt wird, wobei

• die Vergleichsgröße für die Längsbeschleunigung mit Hilfe der Raddrehzahl (n) und des Lenkwinkels ($\delta$) bestimmt wird,
• die Vergleichsgröße für die Querbeschleunigung mit Hilfe der Raddrehzahl (n), des Lenkwinkels ($\delta$) und der Gierrate ($\omega$) bestimmt wird und
• die Vergleichsgröße für die Vertikalbeschleunigung mit Hilfe der relativen Position zwischen einem Fahrwerk und eine Fahrzeugaufbau des Fahrzeugs bestimmt wird und wobei
• die Vergleichsgröße für die Gierrate ($\omega$) mit Hilfe der Raddrehzahl (n) und des Lenkwinkels ($\delta$) bestimmt wird.

14. Verfahren nach Anspruch 13, wobei eine Fahrgeschwindigkeit des Radfahrzeuges (20) bestimmt wird und wobei die Vergleichsgröße unter Berücksichtigung der Fahrgeschwindigkeit ermittelt wird.

15. Verfahren nach Anspruch 14, wobei die Fahrgeschwindigkeit unter Verwendung einer für eine Drehgeschwindigkeit eines Rades des Radfahrzeuges (20) charakteristischen Größe bestimmt wird.

16. Verfahren nach Anspruch 14 oder 15, wobei die Fahrgeschwindigkeit unter Verwendung eines Lenkwinkels zumindest eines lenkbaren Rades (21, 22) des Radfahrzeuges (20) bestimmt wird.

17. Verfahren nach einem der Ansprüche 14 bis 16, wobei die Fahrgeschwindigkeit unter Verwendung zumindest einer der drei von der Messeinrichtung gemessenen Drehraten bestimmt wird.

18. Verfahren nach einem der Ansprüche 13 bis 17, wobei die drei Linearbeschleunigungen als drei linear voneinander unabhängige Messgrößen gemessen werden.

19. Verfahren nach einem der Ansprüche 13 bis 18, wobei die drei Drehraten als Drehraten um jeweils eine von drei jeweils paarweise senkrecht zueinander verlaufenden Achsen gemessen werden.

**20.** Verfahren nach einem der Ansprüche 13 bis 19, wobei bei der Überwachung zumindest eine der Komponenten der Orientierung und eine Vergleichsbeschleunigung verwendet werden und wobei die Vergleichsbeschleunigung ohne Verwendung der zu überwachenden Linearbeschleunigung ermittelt wird.

**21.** Verfahren nach einem der Ansprüche 13 bis 20, wobei die Vergleichsgröße unter Verwendung einer relativen Position eines Fahrzeugaufbaus (25), an dem die Messeinrichtung (1) befestigt ist oder zu befestigen ist, und eines Fahrwerks (21, 22, 23, 24) ermittelt wird.

**22.** Verfahren nach einem der Ansprüche 13 bis 21, wobei zur Bestimmung der Orientierung ein Stillstand des Radfahrzeuges (20) detektiert wird und bei dem Stillstand unter Verwendung zumindest einer der gemessenen Linearbeschleunigungen Werte für eine insbesondere zukünftige Ermittlung der Orientierung bestimmt werden.

**23.** Verfahren nach einem der Ansprüche 13 bis 22, wobei zur Bestimmung der Orientierung eine Geradeausfahrt des Radfahrzeuges (20) auf einem ebenen Untergrund detektiert wird und in dieser Fahrsituation unter Verwendung zumindest einer gemessenen Linearbeschleunigung Werte für eine insbesondere zukünftige Ermittlung der Orientierung bestimmt werden.

**Claims**

**1.** Arrangement for monitoring a measuring device (1) disposed in a wheeled vehicle (20), comprising

    - the measuring device (1), wherein the measuring device (1) is embodied to measure three linear accelerations of the wheeled vehicle (20) which are in each case orientated at a 90-degree angle to one another and three rotation rates, in each case of a rotational movement or of a component of a rotational movement about an axis of the wheeled vehicle (20), wherein the three axes in each case run at a 90-degree angle to one another,
    - an orientation determining device (7) which is embodied to determine from the three rotation rates an orientation of the wheeled vehicle (20) in a coordinate system that is external to the vehicle, **characterised in that** a monitoring device (9) is provided which is embodied to monitor at least one of the measured linear accelerations and one of the measured rotation rates using an output variable of the orientation determining device (9) and using a comparison variable, wherein

        • the comparison variable for the longitudinal acceleration is determined with the aid of the wheel rotation speed (n) and the steering angle ($\delta$),
        • the comparison variable for the lateral acceleration is determined with the aid of the wheel rotation speed (n), the steering angle ($\delta$) and the yaw rate ($\omega$) and
        • the comparison variable for the vertical acceleration is determined with the aid of the relative position between a chassis and a body of the vehicle, and wherein
        • the comparison variable for the yaw rate ($\omega$) is determined with the aid of the wheel rotation speed (n) and the steering angle ($\delta$).

**2.** Arrangement according to claim 1, having a travelling velocity determining device (11) provided for determining a travelling velocity of the wheeled vehicle (20) and connected to the monitoring device (9), wherein the monitoring device (9) is embodied to determine the comparison variable using the travelling velocity.

**3.** Arrangement according to claim 2, wherein the travelling velocity determining device (11) is embodied to determine the travelling velocity using a variable that is characteristic of a rotational speed of a wheel of the wheeled vehicle (20).

**4.** Arrangement according to claim 2 or 3, wherein the travelling velocity determining device (11) is connected to a steering angle determining device (15) for determining a steeling angle of at least one steerable wheel (21, 22) of the wheeled vehicle (20) and wherein the travelling velocity determining device (11) is embodied to determine the travelling velocity using the steering angle.

**5.** Arrangement according to one of claims 2 to 4, wherein the travelling velocity determining device (11) is connected to the measuring device (1) and is embodied to determine the travelling velocity using at least one of the three rotation rates.

**6.** Arrangement according to one of claims 1 to 5, wherein the measuring device (1) has acceleration sensors (31, 32, 33) for measuring the three linear accelerations and rotation rate sensors (41, 42, 43) for measuring the three rotation rates and wherein the acceleration sensors (31, 32, 33) and the rotation rate sensors (41, 42, 43) are parts of a prefabricated constructional unit (1) which is embodied to be installed in the wheeled vehicle (20).

7. Arrangement according to one of claims 1 to 6, wherein the measuring device (1) is embodied in such a way that the three linear accelerations can be measured as three measured variables that are linearly independent of one another.

8. Arrangement according to one of claims 1 to 7, wherein the measuring device (1) is embodied in such a way that the three axes run at right angles to one another in pairs in each case.

9. Arrangement according to one of claims 1 to 8, wherein the monitoring device (9) is embodied to perform the monitoring using the orientation and using a comparative acceleration, and is embodied to determine the comparative acceleration without using the linear acceleration that was measured by the measuring device (1) and is to be monitored.

10. Arrangement according to one of claims 1 to 9, wherein the monitoring device (9) is embodied to determine the comparison variable using a relative position of a vehicle body (25) on which the measuring device (1) is mounted or is to be mounted with respect to a chassis (21, 22, 23, 24).

11. Arrangement according to one of claims 1 to 10, wherein the orientation determining device (7) is embodied to detect a stationary state of the wheeled vehicle (20) and during the stationary state to determine values for an in particular future determination of the orientation using at least one of the linear accelerations measured by the measuring device (1).

12. Arrangement according to one of claims 1 to 11, wherein the orientation determining device (7) is embodied to detect straight-ahead travel of the wheeled vehicle (20) on a level surface and in this driving situation to determine values for an in particular future determination of the orientation using at least one of the linear accelerations measured by the measuring device (1).

13. Method for monitoring a measuring device (1) disposed in a wheeled vehicle (20), wherein the measuring device (1) is embodied to measure three linear accelerations of the wheeled vehicle (20) which are in each case orientated at a 90-degree angle to one another and three rotation rates, in each case of a rotational movement or of a component of a rotational movement about an axis of the wheeled vehicle (20), wherein the three axes in each case run at a 90-degree angle to one another and wherein

- at least components of an orientation of the wheeled vehicle (20) in a coordinate system that is external to the vehicle are determined from the three rotation rates, **characterised in that** monitoring of at least one of the measured linear accelerations and one of the measured rotation rates is performed using at least the orientation components and using a comparison variable, wherein

• the comparison variable for the longitudinal acceleration is determined with the aid of the wheel rotation speed (n) and the steering angle ($\delta$),
• the comparison variable for the lateral acceleration is determined with the aid of the wheel rotation speed (n), the steering angle ($\delta$) and the yaw rate ($\omega$) and
• the comparison variable for the vertical acceleration is determined with the aid of the relative position between a chassis and a body of the vehicle, and wherein
• the comparison variable for the yaw rate ($\omega$) is determined with the aid of the wheel rotation speed (n) and the steering angle ($\delta$).

14. Method according to claim 13, wherein a travelling velocity of the wheeled vehicle (20) is determined and wherein the comparison variable is determined taking the travelling velocity into account.

15. Method according to claim 14, wherein the travelling velocity is determined using a variable that is characteristic of a rotational speed of a wheel of the wheeled vehicle (20).

16. Method according to claim 14 or 15, wherein the travelling velocity is determined using a steering angle of at least one steerable wheel (21, 22) of the wheeled vehicle (20).

**17.** Method according to one of claims 14 to 16, wherein the travelling velocity is determined using at least one of the three rotation rates measured by the measuring device.

**18.** Method according to one of claims 13 to 17, wherein the three linear accelerations are measured as three measured variables that are linearly independent of one another.

**19.** Method according to one of claims 13 to 18, wherein the three rotation rates are measured as rotation rates about in each case one of three axes running orthogonally to one another in pairs in each case.

**20.** Method according to one of claims 13 to 19, wherein at least one of the orientation components and a comparative acceleration are used during the monitoring and wherein the comparative acceleration is determined without using the linear acceleration that is to be monitored.

**21.** Method according to one of claims 13 to 20, wherein the comparison variable is determined using a relative position of a vehicle body (25) on which the measuring device (1) is mounted or is to be mounted with respect to a chassis (21, 22, 23, 24) .

**22.** Method according to one of claims 13 to 21, wherein in order to determine the orientation a stationary state of the wheeled vehicle (20) is detected and during the stationary state values for an in particular future determination of the orientation are determined using at least one of the measured linear accelerations.

**23.** Method according to one of claims 13 to 22, wherein in order to determine the orientation straight-ahead travel of the wheeled vehicle (20) on a level surface is detected and in this driving situation values for an in particular future determination of the orientation are determined using at least one measured linear acceleration.


**Revendications**

**1.** Agencement destiné à la surveillance d'un dispositif de mesure (1) agencé dans un véhicule à roues (20), comprenant

- le dispositif de mesure (1), lequel dispositif de mesure (1) est conçu pour mesurer trois accélérations linéaires, dirigées chacune transversalement les unes par rapport aux autres, du véhicule à roues (20), et trois taux de rotation, et ce pour à chaque fois un mouvement de rotation ou une composante d'un mouvement de rotation autour d'un axe du véhicule à roues (20), les trois axes se présentant à chaque fois transversalement les uns par rapport aux autres,
- un dispositif de détermination d'orientation (7), qui est conçu pour déterminer à partir des trois taux de rotation une orientation du véhicule à roues (20) dans un système de coordonnées externe au véhicule, **caractérisé en ce qu'**il est prévu un dispositif de surveillance (9), qui est conçu pour effectuer une surveillance d'au moins l'une des accélérations linéaires mesurées et de l'un des taux de rotation mesurés, en utilisant une grandeur de sortie du dispositif de détermination d'orientation (7) et en utilisant une grandeur de comparaison,

• la grandeur de comparaison pour l'accélération longitudinale étant déterminée à l'aide du nombre de tours de roue (n) et de l'angle de braquage ($\delta$),
• la grandeur de comparaison pour l'accélération transversale étant déterminée à l'aide du nombre de tours de roue (n), de l'angle de braquage ($\delta$) et de la vitesse de lacet ($\omega$) et
• la grandeur de comparaison pour l'accélération verticale étant déterminée à l'aide de la position relative entre un châssis et une carrosserie du véhicule, où
• la grandeur de comparaison pour la vitesse de lacet ($\omega$) est déterminée à l'aide du nombre de tours de roue (n) et de l'angle de braquage ($\delta$).

**2.** Agencement selon la revendication 1, comprenant un dispositif de détermination de vitesse de roulement (11) pour déterminer une vitesse de roulement du véhicule à roues (20), qui est relié au dispositif de surveillance (9), le dispositif de surveillance (9) étant conçu pour déterminer la grandeur de comparaison en utilisant la vitesse de roulement.

**3.** Agencement selon la revendication 2, dans lequel le dispositif de détermination de vitesse de roulement (11) est conçu pour déterminer la vitesse de roulement en utilisant une grandeur caractéristique pour une vitesse de rotation d'une roue du véhicule à roues (20).

**4.** Agencement selon la revendication 2 ou 3, dans lequel le dispositif de détermination de vitesse de roulement (11) est relié à un dispositif de détermination d'angle de braquage (15) pour déterminer un angle de braquage d'au moins une roue (21, 22) dirigeable du véhicule à roues (20), et dans lequel le dispositif de détermination de vitesse de roulement (11) est conçu pour déterminer la vitesse de roulement en utilisant l'angle de braquage.

**5.** Agencement selon l'une des revendications 2 à 4, dans lequel le dispositif de détermination de vitesse de roulement (11) est relié au dispositif de mesure (1) et est conçu pour déterminer la vitesse de roulement en utilisant au moins l'un des trois taux de rotation.

**6.** Agencement selon l'une des revendications 1 à 5, dans lequel le dispositif de mesure (1) présente des capteurs d'accélération (31, 32, 33) pour mesurer les trois accélérations linéaires, et des capteurs de taux de rotation (41, 42, 43) pour mesurer les trois taux de rotation, et dans lequel les capteurs d'accélération (31, 32, 33) et les capteurs de taux de rotation font partie d'une unité (1) technique, préfabriquée, conçue être montée dans le véhicule à roues (20).

**7.** Agencement selon l'une des revendications 1 à 6, dans lequel le dispositif de mesure (1) est conçu de telle sorte que les trois accélérations linéaires peuvent être mesurées en tant que trois grandeurs de mesure linéairement indépendantes les unes des autres.

**8.** Agencement selon l'une des revendications 1 à 7, dans lequel le dispositif de mesure (1) est conçu de telle sorte que les trois axes sont respectivement agencés par paires perpendiculairement les uns aux autres.

**9.** Agencement selon l'une des revendications 1 à 8, dans lequel le dispositif de surveillance (9) est conçu pour effectuer la surveillance en utilisant l'orientation et en utilisant une accélération de comparaison, et est conçu pour déterminer l'accélération de comparaison sans utiliser l'accélération linéaire à surveiller, mesurée par le dispositif de mesure (1).

**10.** Agencement selon l'une des revendications 1 à 9, dans lequel le dispositif de surveillance (9) est conçu pour déterminer la grandeur de comparaison en utilisant une position relative d'une carrosserie de véhicule (25), sur laquelle le dispositif de mesure (1) est fixé ou est à fixer, et d'un châssis (21, 22, 23, 24).

**11.** Agencement selon l'une des revendications 1 à 10, dans lequel le dispositif de détermination d'orientation (7) est conçu pour détecter un arrêt du véhicule à roues (20) et déterminer des valeurs pour une détermination en particulier future de l'orientation lors de l'arrêt en utilisant au moins l'une des accélérations linéaires mesurées par le dispositif de mesure (1).

**12.** Agencement selon l'une des revendications 1 à 11, dans lequel le dispositif de détermination d'orientation (7) est conçu pour détecter un roulement en ligne droite du véhicule à roues (20) sur un support plan et déterminer des valeurs pour une détermination en particulier future de l'orientation dans cette situation de conduite en utilisant au moins l'une des accélérations linéaires mesurées par le dispositif de mesure (1).

**13.** Procédé destiné à la surveillance d'un dispositif de mesure (1) agencé dans un véhicule à roues (20), dans lequel le dispositif de mesure (1) est conçu pour mesurer trois accélérations linéaires, dirigées chacune transversalement les unes par rapport aux autres, du véhicule à roues (20), et trois taux de rotation, et ce pour à chaque fois un mouvement de rotation ou une composante d'un mouvement de rotation autour d'un axe du véhicule à roues (20), les trois axes se présentant à chaque fois transversalement les uns par rapport aux autres, et dans lequel

- à partir des trois taux de rotation au moins des composantes d'une orientation du véhicule à roues (20) dans un système de coordonnées externe au véhicule sont déterminées, **caractérisé en ce qu'**une surveillance d'au moins l'une des accélérations linéaires mesurées et de l'un des taux de rotation mesurés est effectuée en utilisant au moins les composants de l'orientation et en utilisant une grandeur de comparaison,
• la grandeur de comparaison pour l'accélération longitudinale étant déterminée à l'aide du nombre de tours de roue (n) et de l'angle de braquage ($\delta$),
• la grandeur de comparaison pour l'accélération transversale étant déterminée à l'aide du nombre de tours de roue (n), de l'angle de braquage ($\delta$) et de la vitesse de lacet ($\omega$) et
• la grandeur de comparaison pour l'accélération verticale étant déterminée à l'aide de la position relative entre un châssis et une carrosserie du véhicule, où
• la grandeur de comparaison pour la vitesse de lacet ($\omega$) est déterminée à l'aide du nombre de tours de roue (n) et de l'angle de braquage ($\delta$).

**14.** Procédé selon la revendication 13, dans lequel une vitesse de roulement du véhicule à roues (20) est déterminée et la grandeur de comparaison est calculée en tenant compte de la vitesse de roulement.

**15.** Procédé selon la revendication 14, dans lequel la vitesse de roulement est déterminée en utilisant une grandeur caractéristique pour une vitesse de rotation d'une roue du véhicule à roues (20).

**16.** Procédé selon la revendication 14 ou 15, dans lequel la vitesse de roulement est déterminée en utilisant un angle de braquage d'au moins une roue (21, 22) dirigeable du véhicule à roues (20).

**17.** Procédé selon l'une des revendications 14 à 16, dans lequel la vitesse de roulement est déterminée en utilisant au moins l'un des trois taux de rotation mesurés par le dispositif de mesure.

**18.** Procédé selon l'une des revendications 13 à 17, dans lequel les trois accélérations linéaires sont mesurées en tant que trois grandeurs de mesure linéairement indépendantes les unes des autres.

**19.** Procédé selon l'une des revendications 13 à 18, dans lequel les trois taux de rotation sont mesurés en tant que taux de rotation autour de respectivement un des trois axes respectivement agencés par paires perpendiculairement les uns aux autres.

**20.** Procédé selon l'une des revendications 13 à 19, dans lequel, lors de la surveillance, au moins l'une des composantes de l'orientation et une accélération de comparaison sont utilisées, et dans lequel l'accélération de comparaison est calculée sans utiliser l'accélération linéaire à surveiller.

**21.** Procédé selon l'une des revendications 13 à 20, dans laquelle la grandeur de comparaison est calculée en utilisant une position relative d'une carrosserie de véhicule (25), sur laquelle le dispositif de mesure (1) est fixé ou à fixer, et d'un châssis (21, 22, 23, 24).

**22.** Procédé selon l'une des revendications 13 à 21, dans lequel un arrêt du véhicule à roues (20) est détecté pour déterminer l'orientation, et des valeurs pour une détermination en particulier future de l'orientation sont déterminées lors de l'arrêt en utilisant au moins l'une des accélérations linéaires mesurées.

**23.** Procédé selon l'une des revendications 13 à 22, dans lequel un roulement en ligne droite du véhicule à roues (20) sur un support plan est détecté pour déterminer l'orientation, et des valeurs pour une détermination en particulier future de l'orientation sont déterminées dans cette situation de conduite en utilisant au moins une accélération linéaire mesurée.

# FIG 1

# FIG 2

# FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19603430 A1
- DE 19844913 A1
- US 5408411 A
- US 6260405 B1

- DE 19744084
- US 20030065430 A
- DE 10220575
- WO 0157474 A1